# EUROPÄISCHE PATENTSCHRIFT

(11) **EP 0 480 959 B1**
(45) Veröffentlichungstag und Bekanntmachung des Hinweises auf die Patenterteilung: **21.09.1994**
(21) Anmeldenummer: 90909731.3
(22) Anmeldetag: 22.06.1990
(51) Int. Cl.: C09D 201/00, C09D 133/00, C08K 5/15

(54) **VERFAHREN ZUR HERSTELLUNG EINER MEHRSCHICHTIGEN LACKIERUNG UND BASISLACK ZUR HERSTELLUNG DER BASISSCHICHT EINER MEHRSCHICHTIGEN LACKIERUNG**
PROCESS FOR MAKING A MULTI-LAYER PAINT AND BASIC PAINT FOR MAKING THE BASIC LAYER OF A MULTI-LAYER PAINT
PROCEDE DE FABRICATION D'UN VERNIS MULTICOUCHE ET VERNIS DE BASE POUR L'OBTENTION DE LA COUCHE DE BASE D'UN TEL VERNIS MULTICOUCHE

(30) Priorität: 07.07.1989 DE 3922363
(43) Veröffentlichungstag der Anmeldung: 22.04.1992
(73) Patentinhaber: BASF Lacke + Farben AG, 48165 Münster-Hiltrup (DE)
(72) Erfinder: HEITHORN, Monika, D-4400 Münster (DE); WIEDITZ, Stefan, Sylvania, OH 43560 (US); MAHR, Gerald, D-4400 Münster (DE); DOBBELSTEIN, Arnold, D-4400 Münster (DE)
(74) Vertreter: Münch, Volker, Dr.
(86) Internationale Anmeldenummer: EP9000994
(87) Internationale Veröffentlichungsnummer: WO9100895

(56) Entgegenhaltungen:
- EP-A- 0 089 741
- GB-A- 1 049 100
- US-A- 3 723 147
- US-A- 4 168 249

## Beschreibung

Die Erfindung betrifft ein Verfahren zur Herstellung einer mehrschichtigen Lackierung auf einer Substratoberfläche, bei dem
(1) ein pigmentierter Basislack, der vernetzte Polymermikroteilchen und einen Celluloseester enthält, auf die Substratoberfläche aufgebracht wird
(2) aus der in Stufe (1) aufgebrachten Zusammensetzung ein Polymerfilm gebildet wird
(3) auf der so erhaltenen Basisschicht ein transparenter Decklack aufgebracht wird und anschließend
(4) die Basisschicht zusammen mit der Deckschicht eingebrannt wird.
Die Erfindung betrifft auch einen Basislack zur Herstellung der Basischicht einer mehrschichtigen Lackierung.

Das im Oberbegriff des Anspruchs 1 beschriebene Verfahren ist schon lange bekannt und wird zum Beispiel auch in der US-PS-4,477,536 beschrieben.

Es ist ein erklärtes Ziel der Lackhersteller, den Gehalt an organischen Lösemitteln, insbesondere in den Basislacken zur Herstellung von mehrschichtigen Lackierungen soweit wie irgend möglich herabzusetzen. Die damit verbundene Erhöhung des Anteils an nichtflüchtigen Bestandteilen hat eine Erhöhung der Viskosität der Backe zur Folge. Wenn die Viskosität bei Verarbeitungsbedingungen eine bestimmte Grenze überschreitet, werden Lackierungen mit erheblichen Mängeln (Wolkenbildung, schlechter Metalleffekt, schlechtes Appearance ...) erhalten. Andererseits führt die Zugabe von Substanzen, die aufgrund ihres relativ geringen Molekulargewichts nur einen relativ geringen Viskositätsanstieg verursachen in der Regel zu minderwertigen Lackierungen, weil der transparente Decklack den Basislack anlöst (Basislack und Decklack werden im Naß-in-Naß-Verfahren appliziert).

Die der vorliegenden Erfindung zugrundeliegende Aufgabenstellung bestand demnach in der Bereitstellung von Basislacken, die einen möglichst hohen Anteil an nichtflüchtigen Bestandteilen aufweisen, ohne daß die obengenannten Probleme auftreten.

Diese Aufgabe wird überraschenderweise durch den Einsatz von Basislacken gelöst, die 5 bis 20, vorzugsweise 7 bis 15 Gewichtsprozent vernetzte Polymermikroteilchen, 2 bis 15, vorzugsweise 4 bis 13 Gewichtsprozent eines Celluloseacetobutyrats oder eines Gemisches aus mindestens zwei Celluloseacetobutyrattypen mit unterschiedlichen Molekulargewichtsverteilungen und 5 bis 20, vorzugsweise 7 bis 15 Gewichtsprozent eines epoxidierten Fettsäureesters oder eines Gemisches aus epoxidierten Fettsäureestern enthalten, wobei die Gewichtsprozentangaben auf den Gesamtgehalt an nichtflüchtigen Anteilen, abzüglich Pigmente und anorganische Füllstoffe, bezogen sind, die vernetzten Polymermikroteilchen erhältlich sind, indem ein Gemisch aus
(A) einem ethylenisch ungesättigten Monomeren, das eine ethylenisch ungesättigte Gruppe pro Molekül enthält oder einem Gemisch aus solchen Monomeren und
(B) einem ethylenisch ungesättigten Monomeren, das mindestens zwei ethylenisch ungesättigte Gruppen im Molekül enthält oder einem Gemisch aus solchen Monomeren
einer Emulsionspolymerisation unterworfen wird und die auf diese Weise erhaltene wäßrige Polymermikroteilchendispersion anschließend in ein organisches Lösemittel oder ein Gemisch aus organischen Lösemitteln überführt wird und das Celluloseacetobutyrat bzw. das Gemisch aus mindestens zwei Celluloseacetobutyrattypen so ausgewählt wird, daß eine Lösung von 15 Gewichtsteilen des Celluloseacetobutyrats bzw. der Mischung aus mindestens zwei Celluloseacetobutyrattypen in 85 Gewichtsteilen einer Mischung aus Aceton und Ethanol (Gewichtsverhältnis von Aceton zu Ethanol = 9:1) bei 23 °C eine Viskosität von 200 bis 600, vorzugsweise 300 bis 500 mPa.s aufweist.

Es ist bekannt, epoxidierte Fettsäureester in polymermikroteilchenfreien Basislacken insbesondere zur Verbesserung der Spritznebelaufnahme einzusetzen. Der Zusatz von epoxidierten Fettsäureestern zu polymermikroteilchenfreien Basislacken führt schon bei Zusatz von relativ kleinen Mengen zu den oben beschriebenen Anlöseproblemen, die je nach Farbton des Basislackes mehr oder weniger sichtbar sind.

Es ist überraschend, daß durch eine Kombination von vernetzten Polymermikroteilchen mit einem Celluloseacetobutyrat bzw. einer Mischung aus Celluloseacetobutyrattypen, wobei die Celluloseacetobutyratkomponente ein bestimmtes Viskositätsverhalten zeigt und einem epoxidierten Fettsäureester Basislacke erhältlich sind, die trotz eines erhöhten Anteils an nichtflüchtigen Bestandteilen eine sehr gute Applikationssicherheit aufweisen und Zweischichtlackierungen liefern, die keine auf Anlösevorgänge zurückzuführende Mängel aufweisen und sich zudem noch durch einen verbesserten Decklackstand und eine verbesserte Chemikalienbeständigkeit auszeichnen. Ein weiterer Vorteil der erfindungsgemäßen Basislacke besteht darin, daß sie Unebenheiten in der darunterliegenden Füllerschicht besonders gut abdecken, was zu guten Decklackständen (clear coat hold out) führt.

Die erfindungsgemäß eingesetzten Basislacke enthalten neben dem Celluloseacetobutyrat, dem epoxidierten Fettsäureester und den Polymermikroteilchen noch mindestens ein Bindemittel, vorzugsweise in Kombination mit einem Vernetzungsmittel. Als Bindemittel kann im Prinzip jedes Bindemittel eingesetzt werden, von dem bekannt ist, daß es sich für Basislacke eignet. Als Beispiele werden Polyacrylatharze, Alkydharze, Polyesterharze und Melamin- sowie Harnstoff-Formaldehydharze genannt. Als Beispiele für Vernetzungsmittel werden Polyisocyanate, Polyepoxide und vorzugsweise Harnstoff-, Melamin- und Benzoguanamin-Formaldehydkondensate genannt.

Bevorzugt sind die Basislacke, die als Bindemittel ein Polyacrylatharz und/oder ein Alkydharz und/oder ein Polyesterharz in Kombination mit einem Melamin-Formaldehydharz enthalten. Als Polyacrylatharze bzw. Alkydharze bzw. Polyesterharze bzw. Melamin-Formaldehydharze können alle diejenigen Harze eingesetzt werden, von denen bekannt ist, daß sie für den Einsatz in Basislacken geeignet sind (vgl. z.B. US-PS 4,477,536).

Die erfindungsgemäß eingesetzten Basislacke enthalten Celluloseacetobutyrat. Das Celluloseacetobutyrat wird so ausgewählt, daß eine Lösung von 15 Gewichtsteilen des Celluloseacetobutyrats bzw. der Mischung aus mindestens zwei Celluloseacetobutyrattypen in 85 Gewichtsteilen einer Mischung aus Aceton und Ethanol (Gewichtsverhältnis von Aceton und Ethanol = 9:1) bei 23 °C eine Viskosität von 200 bis 600, vorzugsweise 300 bis 500 mPa.s aufweist. Es ist besonders bevorzugt, ein Gemisch aus zwei Celluloseacetobutyrattypen (CAB-1 und CAB-2) einzusetzen, wobei sich CAB-1 dadurch auszeichnet, daß eine Lösung von 20 Gewichtsteilen CAB-1 in 80 Gewichtsteilen Butylacetat bei 23 °C eine Viskosität von 160 bis 210 mPa.s, vorzugsweise 180 bis 200 mPa.s aufweist und CAB-2 sich dadurch auszeichnet, daß eine Lösung von 20 Gewichtsteilen CAB-2 in 80 Gewichtsteilen Butylacetat bei 23 °C eine Viskosität von 5000 bis 8000, vorzugsweise 6500 bis 7500 mPa.s aufweist. Es können alle Celluloseacetobutyrattypen eingesetzt werden, die das oben beschriebene Viskositätsverhalten zeigen und die in Basislacken einsetzbar sind. Bei den in den erfindungsgemäß eingesetzten Basislacken enthaltenen Polymermikroteilchen handelt es sich um vernetzte Polymermikroteilchen, wie sie beispielsweise aus der DE-A-2818100 und der US-PS-4,477,536 bekannt sind. In diesen beiden Patentdokumenten wird die Herstellung der Polymermikroteilchen ausführlich beschrieben.

Die Basislacke enthalten vernetzte Polymermikroteilchen, die erhältlich sind, indem ein Gemisch aus
(A) einem ethylenisch ungesättigten Monomeren, das eine ethylenisch ungesättigte Gruppe pro Molekül enthält oder einem Gemisch aus solchen Monomeren und
(B) einem ethylenisch ungesättigten Monomer, das mindestens zwei ethylenisch ungesättigte Gruppen im Molekül enthält oder einem Gemisch aus solchen Monomeren
einer Emulsionspolymerisation unterworfen wird und die auf diese Weise erhaltene wäßrige Polymermikroteilchendispersion anschließend in ein organisches Lösemittel oder ein Gemisch aus organischen Lösemitteln überführt wird.

Besonders bevorzugt sind die Basislacke, die Polymermikroteilchen enthalten, die unter Verwendung von ionische und/ oder polare Gruppen, vorzugsweise Hydroxyl- und/oder Carboxylgruppen enthaltenden (A) Komponenten hergestellt worden sind. Als Beispiele für derartige Komponenten werden genannt: (Meth)acrylsäure, Hydroxyethyl(meth)acrylat und Hydroxypropyl(meth)- acrylat. Es ist weiter bevorzugt, die Polymermikroteilchen so stark zu vernetzen, daß die ionischen und/oder polaren Gruppen auch nach der Überführung in ein organisches Lösemittel oder ein Gemisch aus organischen Lösemitteln auf der Oberfläche der Polymermikroteilchen fixiert bleiben und sich nicht in Richtung Kern der Polymermikroteilchen orientieren.
Die Komponenten (A) und (B) sollen zwischen 1 und 20, vorzugsweise 3 und 15 Gew.% ionische und/oder polare Gruppen enthalten. Um ausreichend vernetzte Polymermikroteilchen zu erhalten, reicht es in der Regel aus, auf ein Mol der Komponente (A) 0,25 bis 1,2, vorzugsweise 0,3 bis 1 Mol der Komponente (B) einzusetzen.
Neben den oben aufgezählten Hydroxyl- und/oder Carboxylgruppen enthaltenden (A) Komponenten werden als weitere (A)-Komponenten genannt: Alkylester der (Meth)-Acrylsäure, insbesondere 1 bis 4 Kohlenstoffatome im Alkylrest enthaltende Alkylester der (Meth)-Acrylsäure, wie zum Beispiel Methyl-, Ethyl-, Propyl- oder Butyl(meth)acrylat. Es können auch Monomere wie Styrol oder α-Methylstyrol als Komponente (A) eingesetzt werden.
Als Komponente (B) können beispielsweise eingesetzt werden: Allyl(meth)acrylat, Ethylenglykoldi(meth)acrylat, Butandioldi(meth)acrylat, Hexandioldi(meth)acrylat oder Divinylbenzol.

Die eingesetzten Polymermikroteilchen sind durch Emulsionspolymerisation der Komponenten (A) und (B) in einem wäßrigen Medium in den bekannten Apparaturen, beispielsweise in einem Rührkessel mit Heiz- und Kühlvorrichtung, herstellbar. Die Zugabe der Monomeren kann in der Weise erfolgen, daß eine Lösung aus dem gesamten Wasser, dem Emulgator und einem Teil des Initiators vorgelegt wird und das Monomer bzw. Monomerengemisch und getrennt davon, aber parallel dazu der Rest des Initiators bei der Polymerisationstemperatur langsam zugegeben wird. Es ist jedoch auch möglich, einen Teil des Wassers und des Emulgators vorzulegen und aus dem Rest des Wassers und des Emulgators und aus dem Monomer bzw. Monomerengemisch eine Voremulsion herzustellen, die bei der Polymerisationstemperatur langsam zugegeben wird, wobei der Initiator wiederum getrennt zugegeben wird.

Das Emulsionspolymerisationsverfahren ist ein schon lange Zeit bekanntes Verfahren (vgl. z. B. Chemie, Physik und Technologie der Kunststoffe in Einzeldarstellungen, Dispersionen synthetischer Hochpolymerer, Teil I von F. Hölscher, Springer Verlag, Berlin, Heidelberg, New York, 1969). Die in Rede stehende Emulsionspolymerisation kann durch übliche Initiatoren, wie z. B. Perverbindungen, wie Ammoniumpersulfat, Kaliumpersulfat, Ammonium- oder Alkalimetallperoxydiphosphat und organische Peroxide, wie z. B. Benzoylperoxid, organische Perester, wie Perisopivalat, zum Teil in Kombination mit Reduktionsmitteln, wie Natriumdisulfit, Hydrazin, Hydroxylamin und katalytische Mengen Beschleuniger, wie Eisen-, Kobalt-, Cer- und Vanadylsalze initiiert werden.
Die Emulsionspolymerisation kann auch mit einem Redox Initiatorsystem, bestehend aus H₂O₂ und einem nichtionischen, wasserlöslichen Reduktionsmittel (wie in der EP-A-107300 beschrieben) initiiert werden.
Als Beispiele für einsetzbare nicht-ionische, wasserlösliche Reduktionsmittel werden genannt: Ascorbinsäure, Schwefelverbindungen, wie Thioharnstoff und Mercaptane, Amine, wie Hydroxylamin, Triethylamin und Ethanolamin, reduzierende Säuren, wie Glykolsäure, Weinsäure und Diphenylglykolsäure und Benzylalkohol. Bevorzugt wird Ascorbinsäure eingesetzt.

Als Emulgator kann ein anionischer Emulgator allein oder im Gemisch eingesetzt werden.

Beispiele für anionische Emulgatoren sind die Alkali- oder Ammoniumsalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4-5 Mol Ethylenoxid pro Mol umgesetzten Nonylphenols, Alkyl- oder Arylsulfonats, Natriumlaurylsulfat, Natriumlaurylethoxylatsulfat und sekundäre Natriumalkansulfonate, deren Kohlenstoffkette 8-20 Kohlenstoffatome enthält. Weiterhin können auch Alkali- oder Ammoniumsalze von Sulfobernsteinsäurehalb- oder -diestern aus Sulfobernsteinsäure und Alkoholen mit 6-20 Kohlenstoffatomen eingesetzt werden. Die Menge des anionischen Emulgators beträgt 0,1-5,0 Gew.-%, bezogen auf die Monomeren, vorzugsweise 0,5-4,0 Gew.-%. Ferner kann zur Erhöhung der Stabilität der wässrigen Dispersionen zusätzlich ein nichtionischer Emulgator vom Typ eines ethoxylierten Alkylphenols oder Fettalkohols, z. B. ein Additionsprodukt von 1 Mol Nonylphenol und 4-30 Mol Ethylenoxid in Mischung mit dem anionischen Emulgator eingesetzt werden.

Es ist bevorzugt, die Menge an eingesetztem ionischen Emulgator so gering wie möglich zu halten.

Die Emulsionspolymerisation wird im allgemeinen bei Temperaturen von 20 bis 100 °C, vorzugsweise 40 bis 90 °C durchgeführt. Die erfindungsgemäß eingesetzten vernetzten Polymermikroteilchen müssen einen Durchmesser von 0,01 bis 10 µm, vorzugsweise 0,01 bis 5 µm aufweisen.
Es ist erfindungswesentlich, daß die Basislacke neben den oben beschriebenen vernetzten Polymermikroteilchen, dem Celluloseester bzw. der Mischung aus Celluloseestern auch noch einen epoxidierten Fettsäureester oder ein Gemisch aus epoxidierten Fettsäureestern enthält. Besonders bevorzugt wird epoxidiertes Leinöl und/oder epoxidiertes Sojaöl eingesetzt. Ferner können auch Cycloalkylepoxystearate und n-Alkylepoxystearate wie beispielsweise Methylepoxystearat, Butylepoxystearat und Hexylepoxystearat eingesetzt werden. Epoxidierte Fettsäureester sind schon lange Zeit bekannt und werden von einer großen Anzahl Hersteller angeboten.

Als Pigmente können die erfindungsgemäßen Basislacke farbgebende Pigmente auf anorganischer Basis, wie z. B. Titandioxid, Eisenoxid, Ruß usw., farbgebende Pigmente auf organischer Basis sowie übliche Metallpigmente (z. B. handelsübliche Aluminiumbronzen, Edelstahlbronzen...) und nicht-metallische Effektpigmente (z. B. Perlglanz bzw. Interferenzpigmente) enthalten. Die erfindungsgemäßen Basislacke enthalten vorzugsweise Metallpigmente und/oder Effektpigmente. Die Pigmentierungshöhe liegt in üblichen Bereichen.

Die erfindungsgemäßen Basislacke enthalten vorteilhafterweise auch Wachs (z.B. Ethylen-Vinylacetatcopolymer oder Polyamid) in disperser Form und/oder Rheologiehilfsmittel, wie z.B. Harnstoffe oder Bentone. Die erfindungsgemäßen Basislacke weisen bei Spritzviskosität (etwa 28 bis 35 sec Auslaufzeit, gemessen im ISO-4 Becher) vorzugsweise einen Anteil an nichtflüchtigen Bestandteilen von etwa 25 bis 35 Gew.% auf. Der Anteil an nichtflüchtigen Bestandteilen variiert mit der Pigmentierung der Basislacke. Für Basislacke, die nur Metallpigmente enthalten, liegt er vorzugsweise zwischen 25 und 30 Gew.%. Für metallpigmenthaltige Basislacke mit einem hellen Farbton liegt er vorzugsweise zwischen 25 und 30 Gew.%. Für metallpigmenthaltige Basislacke mit einem dunkleren Farbton liegt er vorzugsweise zwischen 30 und 35 Gew.%. In unifarbigen (d. h. metallpigmentfreien) Basislacken liegt der Anteil an nichtflüchtigen Bestandteilen vorzugsweise zwischen 30 und 35 Gew.%.

Mit der Bereitstellung der erfindungsgemäßen Basislacke wird die eingangs erläuterte Aufgabenstellung gelöst.
Mit den erfindungsgemäßen Basislacken können auch ohne Überlackierung mit einem transparenten Decklack qualitativ hochwertige Lackierungen hergestellt werden.

Die erfindungsgemäßen Basislacke können auf beliebige Substrate, wie z. B. Metall, Holz, Kunststoff oder Papier aufgebracht werden. Dabei können im wesentlichen alle bekannten Applikationsmethoden, wie z. B. Spritzen, Rakeln, Tauchen usw. zur Anwendung kommen, wobei Spritzen besonders bevorzugt ist.

In den folgenden Beispielen wird die Erfindung näher erläutert. Alle Angaben über Teile und Prozentsätze sind Gewichtsangaben, falls nicht ausdrücklich etwas anderes festgestellt wird.
1. Herstellung von erfindungsgemäß eingesetzten Polymermikroteilchen
1.1 Polymermikroteilchendispersion 1
   In einem zylindrischen Glasdoppelwandgefäß mit Rührer, Rückflußkühler, rührbarem Zulaufgefäß, Tropftrichter und Thermometer werden 27,673 g deionisiertes Wasser und
   0,121 g Eikosa-ethylenglykolnonylphenylether (Antarox® CO 850 der GAF Corp., Emulgator 1) vorgelegt und auf 80°C aufgeheizt. Im rührbaren Zulaufgefäß wird aus 13,812 g deionisiertem Wasser, 0,401 g einer 30 %igen wäßrigen Lösung des Ammoniumsalzes des Pentaethylenglykolnonylphenylethersulfats (Fenopon® EP 110 der GAF Corp., Emulgator 2), 3,618 g Hexandiol-1,6-diacrylat, 7,719 g Methylmethacrylat und 0,724 g Hydroxipropylmethacrylat eine Emulsion hergestellt.
   10 Gew.-% dieser Emulsion werden zur Vorlage gegeben. Dann werden 10 Gew.-% einer Lösung von 0,091 g Ammoniumperoxodisulfat (APS) in 7,32 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der APS-Lösung werden die restlichen 90 Gew.-% der Emulsion innerhalb von 2 Stunden und der Initiatorlösung innerhalb von 3 Stunden zugegeben, wobei die Temperatur bei 80°C gehalten wird.
   Nach Beendigung der Zugabe wird die Reaktionsmischung noch für 1 Stunde bei 80 °C gehalten. Danach wird abgekühlt auf mindestens 40 °C und 18,443 g n-Butanol unter Rühren zugegeben und noch eine weitere Stunde gerührt. Nach Abschalten des Rührers wird eine Stunde absitzen gelassen, die untere wäßrige Phase abgetrennt und 20,078 g n-Butylacetat zugegeben.
   Unter Vakuum wird das verbliebene Restwasser azeotrop abdestilliert. Man erhält eine stabile Dispersion polymerer Mikroteilchen mit einem Feststoffgehalt von 30 Gew.-%, einer Säurezahl von 5 und einer Teilchengröße (gemessen mit Photonenkorrelationsspektroskopie) von 160 nm.
1.2 Polymermikroteilchendispersion 2
   In einem zylindrischen Glasdoppelwandgefäß mit Rührer, Rückflußkühler, rührbarem Zulaufgefäß, Tropftrichter und Thermometer werden 27,673 g deionisiertes Wasser und 0,121 g Eikosa-ethylenglykolnonylphenylether (Antarox® CO 850 der GAF Corp., Emulgator 1) vorgelegt und auf 80°C aufgeheizt. Im rührbaren Zulaufgefäß wird aus 13,812 g deionisiertem Wasser, 0,401 g einer 30 %igen wäßrigen Lösung des Ammoniumsalzes des Pentaethylenglykolnonylphenylethersulfats (Fenopon® EP 110 der GAF Corp., Emulgator 2), 3,618 g Hexandiol-1,6-diacrylat, 7,719 g Methylmethacrylat und 0,724 g Hydroxipropylmethacrylat eine Emulsion hergestellt. 10 Gew.-% dieser Emulsion werden zur Vorlage gegeben. Dann werden 10 Gew.-% einer Lösung von 0,091 g Ammoniumperoxodisulfat (APS) in 7,32 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der APS-Lösung werden die restlichen 90 Gew.-% der Emulsion innerhalb von 2 Stunden und der Initiatorlösung innerhalb von 3 Stunden zugegeben, wobei die Temperatur bei 80°C gehalten wird.
   Nach Beendigung der Zugabe wird die Reaktionsmischung noch für 1 Stunde bei 80°C gehalten. Danach wird abgekühlt auf mindestens 40°C und 18,443 g n-Butanol unter Rühren zugegeben und noch eine weitere Stunde gerührt. Nach Abschalten des Rührers wird eine Stunde absitzen gelassen, die untere wäßrige Phase abgetrennt und 0,123 g Dimethylethanolamin sowie 19,955 g n-Butylacetat zugegeben. Unter Vakuum wird das verbliebene Restwasser azeotrop abdestilliert. Man erhält eine stabile Dispersion polymerer Mikroteilchen mit einem Feststoffgehalt von 30 Gew.-%, einer Säurezahl von 5 und einer Teilchengröße (gemessen mit Photonenkorrelationsspektroskopie) von 160 nm.
1.3 Polymermikroteilchendispersion 3
   In einem zylindrischen Glasdoppelwandgefäß mit Rührer, Rückflußkühler, rührbarem Zulaufgefäß, Tropftricher und Thermometer werden 23,238 g deionisiertes Wasser und 0,099 g Eikosa-ethylenglykolnonylphenylether (Antarox® CO 850 der GAF Corp., Emulgator 1) vorgelegt und auf 80°C aufgeheizt. Im rührbaren Zulaufgefäß wird aus 10,780 g deionisiertem Wasser, 0,329 g einer 30 %igen wäßrigen Lösung des Ammoniumsalzes des Pentaethylenglykolnonylphenylethersulfats (Fenopon® EP 110 der GAF Corp., Emulgator 2), 2,967 g Hexandiol-1,6-diacrylat, 6,330 g Methylmethacrylat und 0,594 g Hydroxipropylmethacrylat eine Emulsion hergestellt. 10 Gew.-% dieser Emulsion werden zur Vorlage gegeben. Dann werden 10 Gew.-% einer Lösung von 0,075 g Ammoniumperoxodisulfat in 6,003 g deionisiertem Wasser innerhalb von 5 Minuten zugetropft. Es tritt eine exotherme Reaktion ein. Die Reaktionstemperatur wird zwischen 82 und 88 °C gehalten.
   15 Minuten nach Beendigung der Zugabe der APS-Lösung werden die restlichen 90 Gew.-% der Emulsion innerhalb von 2 Stunden und der Initiatorlösung innerhalb von 3 Stunden zugegeben, wobei die Temperatur bei 80°C gehalten wird.
   Nach Beendigung der Zugabe wird die Reaktionsmischung noch 1 Stunde bei 80°C gehalten. Danach wird abgekühlt auf mindestens 40°C und 15,125 g n-Butanol unter Rühren zugegeben und noch eine weitere Stunde gerührt. Nach Abschalten des Rührers wird eine Stunde absitzen gelassen, die untere wäßrige Phase abgetrennt und 24,430 g einer 75 %igen Lösung eines nach Beispiel 11 der EP-B-119 051 hergestellten Acrylatharzes sowie 10,030 g n-Butylacetat zugegeben. Das verbliebene Restwasser wird azeotrop abdestilliert. Man erhält eine stabile Polymermikroteilchendispersion mit einem Feststoffgehalt von 50 Gew.-%.

2. Herstellung von erfindungsgemäßen Basislacken
2.1 Herstellung eines Vorprodukts A
   296 g einer 7-gewichtsprozentigen Dispersion eines Copolymerisats, das aus 85 bis 95 Gew.-% Ethylen und 15 bis 5 Gew.-% Vinylacetat hergestellt worden ist, (z. B. EVA-1 von BASF AG), in einem Gemisch aus Xylol und Butylacetat (Mischungsverhältnis 1 : 1) wird vorgelegt. In diese Dispersion werden 566 g der Polymermikroteilchendispersion 1 unter intensivem Dissolvern zugegeben. Die so erhaltene Mischung wird 15 Minuten dissolvert. Danach werden 495 g einer 75 Gew.-%igen Lösung eines nach Beispiel 11 der EP-B-119 051 hergestellten Acrylatharzes unter intensivem Mischen zugegeben und etwa weitere 15 Minuten dissolvert. Danach werden 213 g einer 90 %igen xylolischen Lösung eines epoxidierten Sojaöls mit einer Säurezahl nach DIN 53183 von maximal 1 und mit einer Viskosität von 160 bis 300 mPas (20 °C,D=344 s⁻¹) (Uralac® 303-X-90 von DSM-Resins) langsam zugemischt. Das so erhaltene Vorprodukt weist eine
   Viskosität von 55 mPa.s auf.
2.2 Formulierung eines Basislackes mit Farbton silber
   320 g des Vorproduktes A werden vorgelegt und unter intensivem Rühren mit 152 g einer 15 gewichtsprozentigen Lösung eines ersten Celluloseacetobutyrattyps (Celluloseacetobutyrat 381.05 von Eastman) in Butylacetat und 40 g einer 15 gewichtsprozentigen Lösung eines zweiten Celluloseacetobutyrattyps (BP 900, Bayer AG) in Butylacetat vermischt. Danach werden 130 g einer 60 gewichtsprozentigen Lösung eines nach Beispiel 1 der DE-OS-3 041 648 hergestellten Acrylatharzes in einem Gemisch aus Xylol und n-Butanol (4:1), 78 g einer 50 gewichtsprozenti- gen Lösung eines Melaminformaldehydharzes in Iso- butanol (Maprenal® MF 650, Hoechst) sowie 80 g einer 50 gewichtsprozentigen Aufschlämmung von Aluminiumpigment in Butylacetat zugegeben. Der so erhaltene Basislack weist eine Auslaufzeit von 50 sec. im DIN-4-Becher auf.
2.3 Herstellung einer schwarzen Pigmentpaste
   976 g einer 60 gewichtsprozentigen Lösung eines nach Beispiel 1 der DE-OS-3 041 648 hergestellten Acrylatharzes in einem Gemisch aus Xylol und n-Butanol (4 : 1), 226 g Xylol und 236 g Butylacetat werden in einem Dissolver gemischt. Dann werden 52,5 g Farbruß FW2 (Degussa) unter Rühren zugegeben und 30 Minuten dissolvert. Die Paste wird in einer Sandmühle so lange gemahlen bis die Teilchengröße etwa 5 µm beträgt.
2.4 Formulierung eines Basislackes mit Farbton schwarz
   176 g der gemäß 2.3 hergestellten Paste werden vorgelegt und unter intensivem Rühren mit 320 g des Vorproduktes A vermischt. Danach werden unter intensivem Rühren 66 g einer 15 gewichtsprozentigen Lösung von Celluloseacetobutyrat 381.05 (Eastman) in Butylacetat und 40 g einer 15 gewichtsprozentigen Lösung von BP 900 (Bayer AG) in Butylacetat zugegeben (vgl. 2.2). Danach werden 97 g einer 60 gewichtsprozentigen Lösung eines nach Beispiel 1 der DE-OS-3 041 648 hergestellten Acrylatharzes in einem Gemisch aus Xylol und n-Butanol (4 : 1), 90 g einer 50 gewichtsprozentigen Lösung eines Melaminformaldehydharzes in Isobutanol (Maprenal MF 650, Hoechst) sowie 11 g einer 50 gewichtsprozen- tigen Aufschlämmung von Aluminiumpigment in Bu- tylacetat zugegeben.
3. Herstellung von Zweischicht-Metalleffektlackierungen unter Verwendung der erfindungsgemäßen Basislacke gemäß 2.2 und 2.4
   Die Auslaufzeit wird mit Butylacetat auf 35 sec. im ISO-4-Becher eingestellt.
   Der so erhaltene Basislack wird mit Hilfe eines Lackierautomaten in zwei Aufträgen auf ein mit einer Elektrotauchlackierung und einem Füller beschichtetes Blech aufgetragen. Nach einer Ablüftzeit von 3 Minuten wird ein handelsüblicher Klarlack überlackiert und 20 Minuten bei 140°C eingebrannt.

4. Beurteilung der Metalleffektlackierungen

| Verwendeter Basislack gemäß | Gehalt an nicht flüchtigen Bestandteilen (1h, 130°C) | Resistenz gegen Wiederanlösen/Wolkenbildung | Decklack stand | Metalleffekt |
|---|---|---|---|---|
| 2.2 | 27 Gew.-% | 1⁽²⁾ | 1 ⁽²⁾ | 2⁽²⁾ |
| Vergleich⁽¹⁾ | 19 Gew.-% | 1 | 2 | 2 |
| 2.4 | 35 Gew.-% | 1 | 1 | - |
| Vergleich⁽¹⁾ | 24 Gew.-% | 2 | 2 | - |

| | | | | |
|---|---|---|---|---|
| (1) Als Vergleich dienten Zweischichtlackierungen, die unter Verwendung von handelsüblichen Basislacken (silber und schwarz) hergestellt wurden. | | | | |
| (2) Benotung: 1 = sehr gut, 5 = unbrauchbar | | | | |

## Patentansprüche

1. Verfahren zur Herstellung einer mehrschichtigen Lackierung auf einer Substratoberfläche, bei dem
(1) ein pigmentierter Basislack, der mindestens ein Bindemittel, vernetzte Polymermikroteilchen und einen Celluloseester enthält, auf die Substratoberfläche aufgebracht wird,
(2) aus der in Stufe (1) aufgebrachten Zusammensetzung ein Polymerfilm gebildet wird,
(3) auf der so erhaltenen Basisschicht ein transparenter Decklack aufgebracht wird und anschließend
(4) die Basisschicht zusammen mit der Deckschicht eingebrannt wird,
dadurch gekennzeichnet, daß der Basislack 5 bis 20 Gewichtsprozent vernetzte Polymermikroteilchen, 2 bis 15 Gewichtsprozent eines Celluloseacetobutyrats oder eines Gemisches aus mindestens zwei Celluloseacetobutyrattypen mit unterschiedlichen Molekulargewichtsverteilungen und 5 bis 20 Gewichtsprozent eines epoxidierten Fettsäureesters oder eines Gemisches aus epoxidierten Fettsäureestern enthält, wobei die Gewichtsprozentangaben auf den Gesamtgehalt an nichtflüchtigen Anteilen, abzüglich Pigmente und anorganische Füllstoffe, bezogen sind, die vernetzten Polymermikroteilchen erhältlich sind, indem ein Gemisch aus
(A) einem ethylenisch ungesättigten Monomeren, das eine ethylenisch ungesättigte Gruppe pro Molekül enthält oder einem Gemisch aus solchen Monomeren und
(B) einem ethylenisch ungesättigten Monomeren, das mindestens zwei ethylenisch ungesättigte Gruppen im Molekül enthält oder einem Gemisch aus solchen Monomeren
einer Emulsionspolymerisation unterworfen wird und die auf diese Weise erhaltene wäßrige Polymermikroteilchendispersion anschließend in ein organisches Lösemittel oder ein Gemisch aus organischen Lösemitteln überführt wird und das Celluloseacetobutyrat bzw. das Gemisch aus mindestens zwei Celluloseacetobutyrattypen so ausgewählt wird, daß eine Lösung von 15 Gewichtsteilen des Celluloseacetobutyrats bzw. der Mischung aus mindestens zwei Celluloseacetobutyrattypen in 85 Gewichtsteilen einer Mischung aus Aceton und Ethanol (Gewichtsverhältnis von Aceton zu Ethanol = 9:1) bei 23 °C eine Viskosität von 200 bis 600 mPa.s aufweist.

2. Basislack zur Herstellung der Basisschicht einer mehrschichtigen Lackierung, der Pigmente, mindestens ein Bindemittel, vernetzte Polymermikroteilchen und Celluloseacetobutyrat enthält, dadurch gekennzeichnet, daß der Basislack 5 bis 20 Gewichtsprozent vernetzte Polymermikroteilchen, 2 bis 15 Gewichtsprozent eines Celluloseacetobutyrats oder eines Gemisches aus mindestens zwei Celluloseacetobutyrattypen mit unterschiedlichen Molekulargewichtsverteilungen und 5 bis 20 Gewichtsprozent eines epoxidierten Fettsäureesters oder eines Gemisches aus epoxidierten Fettsäureestern enthält, wobei die Gewichtsprozentangaben auf den Gesamtgehalt an nichtflüchtigen Anteilen, abzüglich Pigmente und anorganische Füllstoffe, bezogen sind, die vernetzten Polymermikroteilchen erhältlich sind, indem ein Gemisch aus
(A) einem ethylenisch ungesättigten Monomeren, das eine ethylenisch ungesättigte Gruppe pro Molekül enthält oder einem Gemisch aus solchen Monomeren und
(B) einem ethylenisch ungesättigten Monomeren, das mindestens zwei ethylenisch ungesättigte Gruppen im Molekül enthält oder einem Gemisch aus solchen Monomeren
einer Emulsionspolymerisation unterworfen wird und die auf diese Weise erhaltene wäßrige Polymermikroteilchendispersion anschließend in ein organisches Lösemittel oder ein Gemisch aus organischen Lösemitteln überführt wird und das Celluloseacetobutyrat bzw. das Gemisch aus mindestens zwei Celluloseacetobutyrattypen so ausgewählt wird, daß eine Lösung von 15 Gewichtsteilen des Celluloseacetobutyrats bzw. der Mischung aus mindestens zwei Celluloseacetobutyrattypen in 85 Gewichtsteilen einer Mischung aus Aceton und Ethanol (Gewichtsverhältnis von Aceton zu Ethanol = 9:1) bei 23 °C eine Viskosität von 200 bis 600 mPa.s aufweist.

3. Verfahren oder Basislack nach Anspruch 1 oder 2, dadurch gekennzeichnet, daß der Basislack Metallpigmente enthält.

4. Verfahren oder Basislack nach einem der Ansprüche 1 bis 3, dadurch gekennzeichnet, daß als epoxidierter Fettsäureester epoxidiertes Leinöl oder epoxidiertes Sojaöl eingesetzt wird.

## Claims

1. Process for the production of a multi-layer paint coating on the surface of a substrate, in which
(1) a pigmented base paint containing at least one binder, crosslinked polymer microparticles and a cellulose ester is applied to the surface of the substrate
(2) a polymer film is formed from the composition applied in stage (1)
(3) a transparent finish is applied to the base coat thus obtained, and then
(4) the base coat is baked, together with the top coat,
characterized in that the base paint contains 5 to 20 per cent by weight of crosslinked polymer microparticles, 2 to 15 per cent by weight of a cellulose acetobutyrate or of a mixture of at least two types of cellulose acetobutyrate having different molecular weight distributions, and 5 to 20 per cent by weight of an epoxidized fatty acid ester or of a mixture of epoxidized fatty acid esters, in which the weight percentages relate to the total content of nonvolatile constituents, excluding pigments and inorganic fillers, the crosslinked polymer microparticles are obtainable by subjecting a mixture of
(A) an ethylenically unsaturated monomer containing one ethylenically unsaturated group per molecule, or a mixture of such monomers, and
(B) an ethylenically unsaturated monomer containing at least two ethylenically unsaturated groups in the molecule, or a mixture of such monomers,
to emulsion polymerization, and the aqueous polymer microparticle dispersion thus obtained is subsequently transferred to an organic solvent or a mixture of organic solvents, and the cellulose acetobutyrate or the mixture of at least two types of cellulose acetobutyrate is so selected that a solution of 15 parts by weight of the cellulose acetobutyrate or of a mixture of at least two types of cellulose acetobutyrate in 85 parts by weight of a mixture of acetone and ethanol (ratio by weight of acetone to ethanol = 9:1) at 23°C has a viscosity of 200 to 600 mPa.s.

2. Base paint for the production of the base coat of a multi-layer paint coating, which paint contains pigments, at least one binder, crosslinked polymer microparticles and cellulose acetobutyrate, characterized in that the base paint contains 5 to 20 per cent by weight of crosslinked polymer microparticles, 2 to 15 per cent by weight of a cellulose acetobutyrate or of a mixture of at least two types of cellulose acetobutyrate having different molecular weight distributions, and 5 to 20 acetobutyrate per cent by weight of an epoxidized fatty acid ester or of a mixture of epoxidized fatty acid esters, in which the weight percentages relate to the total content of nonvolatile constituents, excluding pigments and inorganic fillers, the crosslinked polymer microparticles are obtainable by subjecting a mixture of
(A) an ethylenically unsaturated monomer containing one ethylenically unsaturated group per molecule, or a mixture of such monomers, and
(B) an ethylenically unsaturated monomer containing at least two ethylenically unsaturated groups in the molecule, or a mixture of such monomers,
to emulsion polymerization, and the aqueous polymer microparticle dispersion thus obtained is subsequently transferred to an organic solvent or a mixture of organic solvents, and the cellulose acetobutyrate or the mixture of at least two types of cellulose acetobutyrate is so selected that a solution of 15 parts by weight of the cellulose acetobutyrate or of a mixture of at least two types of cellulose acetobutyrate in 85 parts by weight of a mixture of acetone and ethanol (ratio by weight of acetone to ethanol = 9:1) at 23°C has a viscosity of 200 to 600 mPa.s.

3. Process or base paint according to Claim 1 or 2, characterized in that the base paint contains metallic pigments.

4. Process or base paint according to any one of Claims 1 to 3, characterized in that the epoxidized fatty acid ester employed is epoxidized linseed oil or epoxidized soya oil.

## Revendications

1. Procédé de fabrication d'un vernis multicouche sur une surface de support, dans lequel
(1) on applique sur la surface de support un vernis de base pigmentée qui contient au moins un liant, des micro-particules polymères réticulées et un ester cellulosique
(2) un film polymère est formé à partir de la composition appliquée à l'étape (1)
(3) un vernis de finition transparent est appliqué sur la couche de base ainsi obtenue et enfin
(4) la couche de base et la couche de finition sont cuites ensemble,
caractérisé en ce que le vernis de base contient 5 à 20 pour cent en poids de micro-particules polymères réticulées, 2 à 15 pour cent en poids d'un acétobutyrate de cellulose ou d'un mélange d'au moins deux types d'acétobutyrates de cellulose ayant différentes répartitions de poids moléculaire et 5 à 20 pour cent en poids d'un ester d'acide gras époxydé ou d'un mélange d'esters epoxydés d'acide gras, où les indications de pourcentage en poids se rapportent au contenu total de constituants non volatils, déduction faite des pigments et des agents de remplissage inorganiques, où les microparticules polymères réticulées sont disponibles par le fait qu'un mélange de
(A) un monomère éthyléniquement insaturé, qui contient un groupement éthyléniquement insaturé par molécule ou un mélange de monomères de ce type et
(B) un monomère éthyléniquement insaturé qui contient au moins deux groupements éthyléniquement insaturés par molécule ou un mélange de monomères de ce type
est soumis à une polymérisation en émulsion et où la dispersion aqueuse de micro-particules polymères obtenue de cette manière est ensuite transférée dans un solvant organique ou un mélange de solvants organiques et que l'acétobutyrate de cellulose, ou bien le mélange d'au moins deux types d'acétobutyrates de cellulose, est choisi de telle sorte qu'une solution de 15 parties en poids d'acétobutyrate de cellulose, ou bien du mélange d'au moins deux types d'acétobutyrates de cellulose dans 85 parties en poids d'un mélange constitué d'acétone et d'éthanol (rapport pondéral de l'acétone sur l'éthanol = 9:1), présente, à une température de 23 °C, une viscosité de 200 à 600 mPa.s.

2. Vernis de base pour la fabrication d'une couche de base d'un vernis multicouche, qui contient des pigments, au moins un liant, des micro-particules polymères réticulées et de l'acétobutyrate de cellulose, caractérisé en ce que le vernis de base contient 5 à 20 pour cent en poids de micro-particules polymères réticulées, 2 à 15 pour cent en poids d'un acétobutyrate de cellulose ou d'un mélange d'au moins deux types d'acétobutyrates de cellulose ayant différentes répartitions de poids moléculaire et 5 à 20 pour cent en poids d'un ester d'acide gras époxydé ou d'un mélange d'esters d'acide gras epoxydés, où les indications de pourcentage en poids se rapportent au contenu total des constituants non volatils, déduction faite des pigments et des agents de remplissage inorganiques, où les micro-particules polymères réticulées sont disponibles par le fait qu'un mélange de
(A) un monomère éthyléniquement insaturé, qui contient un groupement éthyléniquement insaturé par molécule ou un mélange de monomères de ce type et
(B) un monomère éthyléniquement insaturé qui contient au moins deux groupements éthyléniquement insaturés par molécule ou un mélange de monomères de ce type
est soumis à une polymérisation en émulsion et où la dispersion aqueuse de micro-particules polymères obtenue de cette manière est ensuite transférée dans un solvant organique ou un mélange de solvants organiques et que l'acétobutyrate de cellulose, ou bien le mélange d'au moins deux types d'acétobutyrates de cellulose, est choisi de telle sorte qu'une solution de 15 parties en poids d'acétobutyrate de cellulose, ou bien du mélange d'au moins deux types d'acétobutyrates de cellulose dans 85 parties en poids d'un mélange constitué d'acétone et d'éthanol (rapport pondéral de l'acétone sur l'éthanol = 9:1), présente, à une température de 23 °C, une viscosité de 200 à 600 mPa.s.

3. Procédé ou vernis de base selon la revendication 1 ou 2, caractérisé en ce que le vernis de base contient des pigments métalliques.

4. Procédé ou vernis de base selon l'une quelconque des revendications 1 à 3, caractérisé en ce que l'on utilise, en tant qu'ester d'acide gras époxydé, de l'huile de lin époxydée ou de l'huile de soja époxydée.
